# EUROPEAN PATENT APPLICATION

(11) **EP 3 364 531 A1**
(43) Date of publication of application: **22.08.2018**
(21) Application number: 18156761.1
(22) Date of filing: 14.02.2018
(51) Int. Cl.: H02K 21/46, H02K 1/22, H02K 16/00, H02K 16/02

(54) **A HYBRID MOTOR AND AN ASSOCIATED METHOD THEREOF**

(30) Priority: 16.02.2017 US 201715434148
(71) Applicant: General Electric Company, Schenectady, NY 12345 (US)
(72) Inventor: DE SOUZA, Luiz Felipe Wilcox, 21941-615 Rio de Janeiro (BR); TEVES, Ricardo Hector, 9000 Comodoro Rivadavia (AR); BITTENCOURT, Jose Luiz, 21941-593 Rio de Janeiro (BR); LIMA, Luiz Andre Moyses, RJ 21941-593 Rio de Janeiro (BR); RABELO, Balduino Cezar, RJ Rio de Janeiro (BR); SOARES, Marcelo Nesci, RJ 21941-593 Rio de Janeiro (BR)
(74) Representative: Illingworth-Law, William Illingworth

(57) **Abstract**

A hybrid motor 126 includes a motor shaft 206, a stator 202 comprising a stator core 220, a plurality of stator windings wound around the stator core 220, and a plurality of stator bearings 230 for supporting the motor shaft 206 against the stator core 220. The hybrid motor further includes a rotor 204 disposed within the stator 202. The rotor 204 includes a plurality of rotor core segments 226 disposed along an axial direction and coupled to the motor shaft 206. The plurality of rotor core segments 226 includes a damping rotor core segment 226a and a synchronous rotor core segment 226b. The rotor 204 also includes a plurality of rotor bearings 228 for supporting the motor shaft 206 against plurality of rotor core segments 226.

## Description

### BACKGROUND

Embodiments of the present specification relate generally to motors, and more particularly to a hybrid motor and an associated method thereof.

For oil and gas applications, the boreholes are surrounded by subterranean material. An outer casing is inserted in a borehole and is held in place by providing cement in space between formed between an outer surface of the casing and surrounding earth. Additionally, a production tubing, an inner casing, and a conductor casing may be provided inside the outermost casing. A fluid lifting system, for electric submersible pump, is used to pump a well bore fluid fluid from the wellbore to handling and processing equipment disposed on the earth's surface. A typical electric submersible pump (ESP) includes a submersible pump unit, an electric motor, and a seal disposed between the pump unit and the motor.

Permanent magnet motors are typically used in the electric submersible pump for efficiency purpose. However, permanent magnet motors are unable to operate without elaborate controls because such motors cannot be started when connected directly to a power line. Further, the permanent magnet motors generate oscillations while driving a variable load. In such situations, damping windings are used to reduce the oscillations of the motors. Damping windings require additional lateral space and hence have drawbacks associated with space for oil and gas applications.

### BRIEF DESCRIPTION

In accordance with one aspect of the invention, a hybrid motor is disclosed. The hybrid motor includes a motor shaft, a stator comprising a stator core, a plurality of stator windings wound around the stator core, and a plurality of stator bearings for supporting the motor shaft against the stator core. The hybrid motor further includes a rotor disposed within the stator. The rotor includes a plurality of rotor core segments disposed along an axial direction and coupled to the motor shaft. The plurality of rotor core segments includes a damping rotor core segment and a synchronous rotor core segment. The rotor also includes a plurality of rotor bearings for supporting the motor shaft against plurality of rotor core segments.

In accordance with another aspect of the present invention, a method for operating a hybrid motor is disclosed. The method includes supplying electric power to the hybrid motor. The hybrid motor includes a stator having a stator core, a plurality of stator windings wound around the stator core, and a plurality of stator bearings for supporting a motor shaft against the stator core. The hybrid motor further includes a rotor disposed within the stator. The rotor includes a plurality of rotor core segments disposed along an axial direction and coupled to the motor shaft. The plurality of rotor core segments includes a damping rotor core segment and a synchronous rotor core segment. The rotor also includes a plurality of rotor bearings for supporting the motor shaft against plurality of rotor core segments. The method further includes transmitting a load torque to the motor shaft, by the synchronous rotor core segment, using a motor drive technique. The method also includes transmitting a damping torque to the motor shaft for reducing oscillations of the motor shaft, by the damping rotor core segment.

In accordance with another aspect of the invention, an electric submersible pump is disclosed. The electric submersible pump includes a pump unit and a hybrid motor coupled to the pump unit. The hybrid motor includes a motor shaft, a stator comprising a stator core, a plurality of stator windings wound around the stator core, and a plurality of stator bearings for supporting the motor shaft against the stator core. The hybrid motor further includes a rotor disposed within the stator. The rotor includes a plurality of rotor core segments disposed along an axial direction and coupled to the motor shaft. The plurality of rotor core segments includes a damping rotor core segment and a synchronous rotor core segment. The rotor further includes a plurality of rotor bearings for supporting the motor shaft against plurality of rotor core segments.

### DRAWINGS

These and other features and aspects of embodiments of the present invention will become better understood when the following detailed description is read with reference to the accompanying drawings in which like characters represent like parts throughout the drawings, wherein:
FIG. 1 is a schematic illustration of a lifting system in accordance with an exemplary embodiment;
FIG. 2 is longitudinal cross section of a hybrid motor in accordance with an exemplary embodiment;
FIG. 3A is a schematic cross section of a hybrid motor across a damping rotor segment in accordance with an exemplary embodiment;
FIG. 3B is schematic cross section of a hybrid motor across a synchronous rotor segment in accordance with an exemplary embodiment;
FIG. 4A is a perspective view of a damping rotor core segment of the hybrid motor in accordance with an exemplary embodiment;
4B is a perspective view of a synchronous rotor core segment of the hybrid motor in accordance with an exemplary embodiment;
FIG. 5 is an illustration of the external apperence of a hybrid motor in accordance with an exemplary embodiment;
FIG. 6 is a graph illustrating damping characteristics of a hybrid motor in accordance with an exemplary embodiment; and
FIG. 7 is a flow chart of a method for operating a hybrid motor in accordance with an exemplary embodiment.

### DETAILED DESCRIPTION

As will be described in detail hereinafter, embodiments of a system and a method relate generally to electric motors, and more particularly to a hybrid motor and an associated method thereof. The hybrid motor includes a rotor having a plurality of rotor core segments. The plurality of rotor core segments includes a plurality of synchronous rotor core segments and at least one induction rotor core segment. The hybrid motor is a synchronous motor configured to generate enhanced motor damping torque while driving a variable load.

The term 'motor' refers to an electro mechanical machine used to convert electric energy into a mechanical rotational energy. The term 'rotor core segment' refers to a rotor of shorter length of induction type or permanent-magnet type. The term 'slip' may refer to a difference in frequency of a stator magnetic field and a rotor magnetic field. The term 'slip' may also refer to a difference between synchronous speed and actual rotor speed. The term 'torque' refers to a force acting on a rotor along a direction of rotation. The term 'damping torque' refers to a force acting on a rotor along a direction opposite to a direction of the rotation.

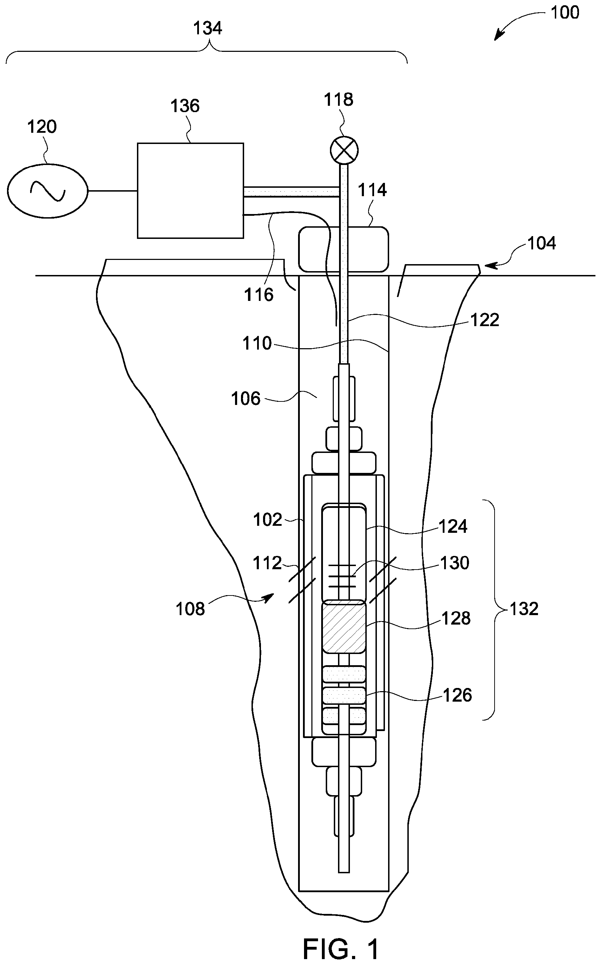

FIG. 1 is a schematic illustration of a lifting system 100 in accordance with an exemplary embodiment. The lifting system 100 is disposed in a well 104 having a well bore 106 drilled into a geological formation 108 having hydrocarbon fluids such as, but not limited to, petroleum and shale gas. The lifting system 100 includes a well string 102 for pumping the hydrocarbon fluid out from the well 104 and a surface equipment 134 for receiving the hydrocarbon fluid pumped by the well string 102. The lifting system 100 includes a casing 110 disposed in the well bore 106. The casing 110 includes a plurality of perforations 112 to enable flow of the hydrocarbon fluids from the geological formation 108 to the well bore 106. The lifting system 100 further includes a well head 114 over which the surface equipment 134 is installed. The well string 102 includes an electric submersible pump (ESP) 132 positioned inside the well bore casing 110. A power cable 116 is coupled to a power source 120 and extends through the well head 114 to the well string 102. The power source 120 is configured to supply electric power to the well string 102. The lifting system 100 also includes a drive unit 136 which connects the power source 120 to the well string 102 and configured to control operation of the ESP 132. In one embodiment, the drive unit 136 is a variable speed drive unit. In another embodiment, the drive unit 136 is an on-line drive unit. The power cable 116 is insulated from the subsea surroundings and connected to a production unit (not shown) located above a surface of sea through a production tubing 122. A flow control valve 118 is coupled to the production tubing 122.

The electric submersible pump (ESP) 132 includes a pump unit 124 driven by an electric hybrid motor 126. The pump unit 124 is configured to lift the hydrocarbon fluids from the well 104. In one embodiment, the pump unit 124 is a multi-stage centrifugal pump driven by the electric hybrid motor 126. The ESP 132 further includes a seal 128 disposed between the pump unit 124 and the electric hybrid motor 126. The seal 128 is used to prevent mixing of the hydrocarbon fluids in the pump unit 124 with motor oil of the electric hybrid motor 126. The pump unit 124 receives the hydrocarbon fluids through an inlet section 130 and pumps the received hydrocarbon to an earth's surface through the production tubing 122. The hydrocarbon fluids are extracted via the well head 114 and processed further by the surface equipment 134.

The electric hybrid motor 126 is configured to generate an initial starting torque and subsequently damping torque during load variations. The term 'hybrid motor' is used to refer the electric hybrid motor 126 in subsequent paragraphs with reference to subsequent figures.

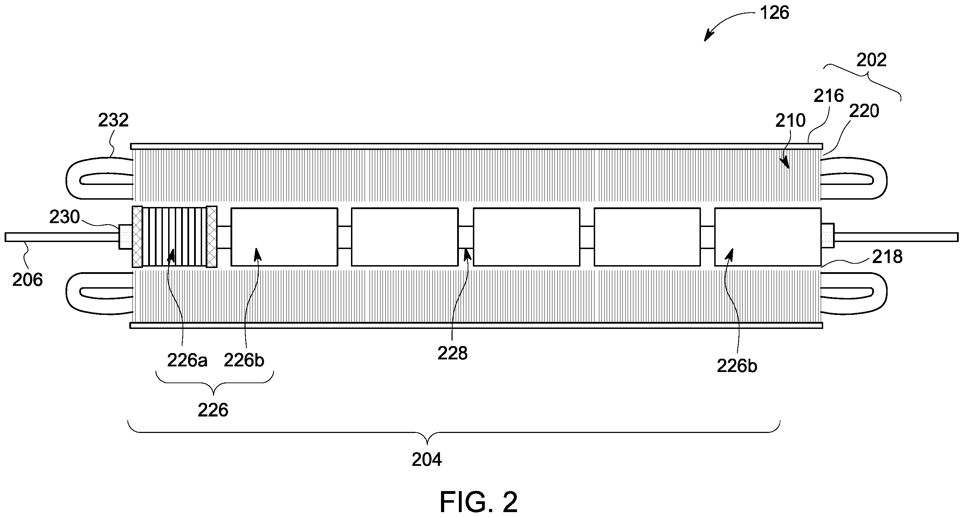

FIG. 2 is a longitudinal cross section of the hybrid motor 126 in accordance with an exemplary embodiment. The hybrid motor 126 includes a housing 216, a stator 202 including a stator core 220 having a plurality of stator laminations 210, and a rotor 204 having a plurality of rotor core segments 226 and a plurality of rotor bearings 228. The stator laminations 210 are stacked along an axial direction of the hybrid motor 126. In one embodiment, the stator core 220 is made of steel, cast iron, or cast aluminum alloy. The hybrid motor 126 further includes a motor shaft 206 supported by a pair of stator bearings 230 against the housing 216. The rotor core segments 226 are disposed along an axial direction of the motor shaft 206. The rotor core segments 226 are supported by the plurality of rotor bearings 228 disposed along the axial direction of the motor shaft 206. The plurality of rotor core segments 226 includes a damping rotor core segment 226a and a plurality of synchronous rotor core segments 226b. In the illustrated embodiment, each synchronous rotor core segment 226b includes a plurality of permanent magnets. Specifically, each synchronous rotor core segment 226b includes the plurality of permanent magnets disposed along a circumferential direction. In one embodiment, each synchronous rotor core segment 226b includes a plurality of magnetic poles. In certain other embodiments, the plurality of rotor core segments 226 includes a plurality of damping rotor core segments 226a having at least one squirrel cage induction rotor core segment. It should be noted herein that the position of the one or more damping rotor core segments 226a and the synchronous rotor core segments 226b on the motor shaft 206 may vary depending on the application.

In some embodiments, the rotor core segments 226 are separately manufactured and are fastened together by a suitable securing mechanism. Further, the rotor core segments 226 are secured to the motor shaft 206 by a bolting mechanism or by welding, for example.

Stator windings 232 extend through stator slots and are wound around the stator laminations 210. It may be noted that the output power of the hybrid motor 126 may be varied based on the number of rotor core segments 226. Specifically, the damping provided by the hybrid motor 126, is dependent on the size and the number of damping rotor core segments 226a.

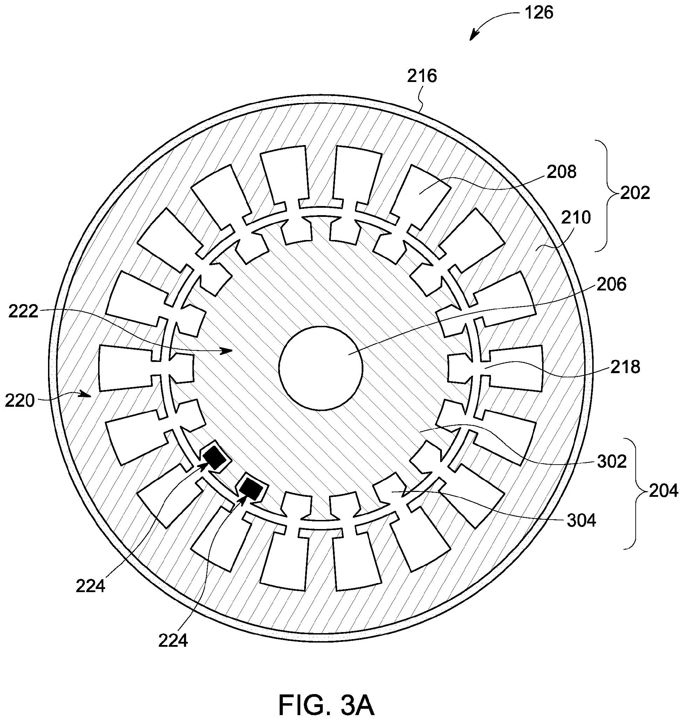

FIG. 3A illustrates a cross section of the hybrid motor 126 across the damping rotor core segment 226a in accordance with an exemplary embodiment. The hybrid motor 126 includes the stator 202 having the stator core 220 and the rotor 204 having a rotor core 222. The stator core 220 includes a plurality of stator slots 208 formed in the pluarality of stator laminations 210. The rotor core 222 includes a plurality of rotor slots 304. Further, a plurality of conductors 224 is disposed in the plurality of rotor slots 304. It may be noted that although only two conductors 224 are shown for the ease of illustration, it should be noted herein that such conductors 224 are disposed in all the rotor slots 304. In such an embodiment, a magetic field is generated by applying electric current to a plurality of coils wound around the plurality of conductors 224. The rotor core 222 is formed by a stack of a plurality of rotor laminations 302. In one embodiment, the plurality of rotor laminations 302 is made up of cast steel. The motor shaft 206 is securely coupled to and rotates along with the rotor 204. The rotor 204 is co-axially mounted on the motor shaft 206 such that an air gap 218 is maintained between the stator core 220 and the rotor 204. The stator core 220, the rotor 204, and the motor shaft 206 are positioned inside the housing 216.

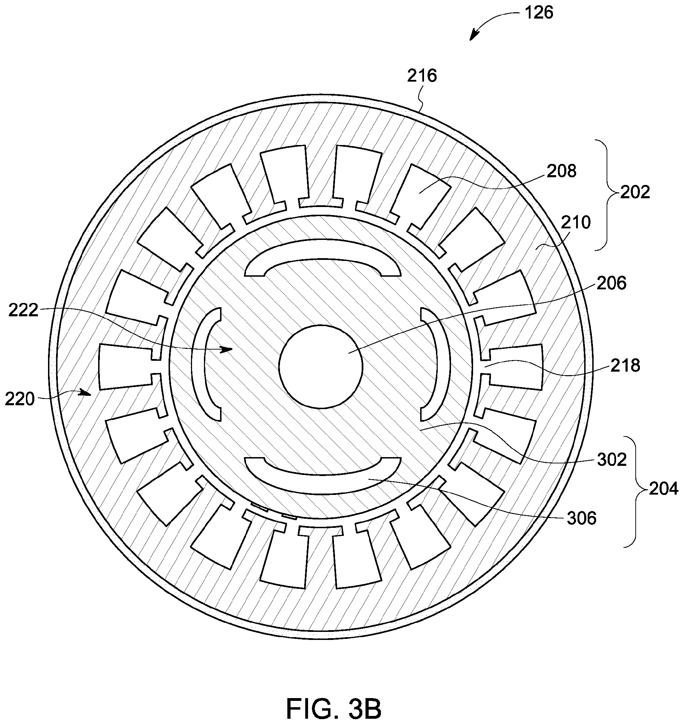

FIG. 3B illustrates a cross section of the hybrid motor 126 across the synchronous rotor core segment 226b in accordance with an exemplary embodiment. As discussed earlier, the hybrid motor 126 includes the stator 202 having the stator core 220 and the rotor 204 having the rotor core 222. The stator core 220 includes the plurality of stator slots 208 formed in the pluarality of stator laminations 210. The rotor core 222 is provided with a plurality of permanent magnets 306. In the illustrated embodiment, the permanent magnets 306 are embedded within the rotor core 222. In other embodiments, the permanent magnets 306 are mounted on a surface of the rotor core 222. In another embodiment, the permanent magnets 306 are inserted radially into the rotor core 222. In certain embodiments, the permanent magnets 306 are disposed along a circumferential direction. The plurality of permanent magnets may have a variety of shapes such as, but not limited to, a cuboid and a cylinder. In certain other embodiments, the plurality of permanent magnets may be curved shape. The rotor core 222 is formed by a stack of a plurality of rotor laminations 302. In one embodiment, the permanent magnets 224 are made of samarium cobalt composition. In another embodiment, the permanent magnets 224 are made of neodymium iron boron.

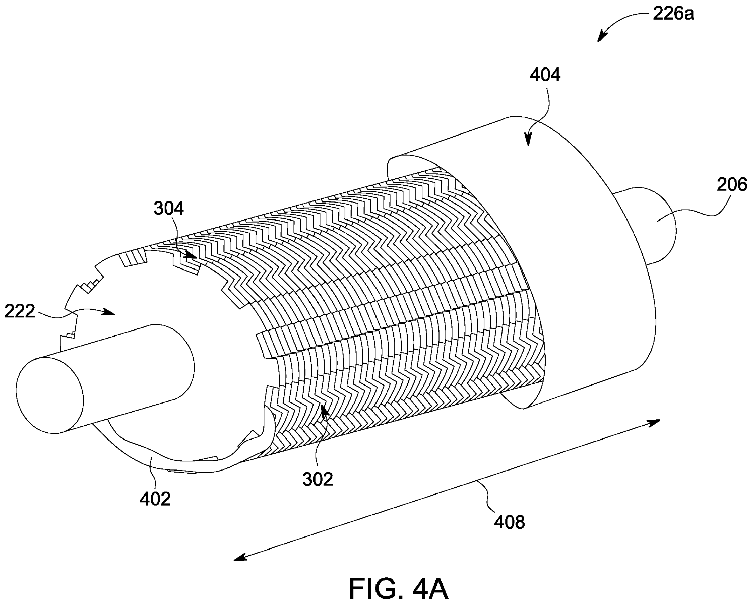

FIG. 4A is a perspective view of one damping rotor core segment 226a among the plurality of rotor core segments 226 in accordance with an exemplary embodiment. The damping rotor core segment 226a includes the rotor core 222 formed by the plurality of rotor laminations 302 disposed on the motor shaft 206. An end ring 402 is used as a protective cover for the plurality of rotor laminations 302. The damping rotor core segment 226a further includes the plurality of rotor slots 304 and one or more retention sleeves 404 fitted to the plurality of rotor slots 304. In one embodiment, the plurality of rotor slots 304 is defined by a plurality of conductors. In one such embodiment, a plurality of windings are disposed in the plurality of rotor slots 304.

It may be noted herein that an increased number of rotor slots 304 in the damping rotor core segment 226a allows the magnetic flux density in the stator laminations to be evenly distributed. In such embodiments, the amount of steel required for the manufacture of the stator core 220 shown in FIG.2 is reduced. The output power of the hybrid motor is determined based on an axial length 408 of the damping rotor core segment 226a. If the axial length of the damping rotor core segment 226a is greater, amount of electric power generated is increased.

During operation, the stator core 220 of FIG.2 is energized by an electric source, for example, an alternating electric current source, and a rotating magnetic field is generated. In one embodiment of the damping rotor core segment 226a, the generated rotating magetic field of the stator induces current in the the electric conductors disposed in the plurality of rotor slots 304. Specifically, the rotating magnetic field of the stator interacting with the electric conductors of the damping rotor core segment 226a generates a torque. The generated torque imparts an angular motion to the damping rotor core segment 226a to drive a load. Further, the induced current in the electric conductors generate a rotor magnetic field that opposes the rotating magnetic field of the stator. The rotating magnetic field opposing the stator magnetic field, drives the damping rotor core segment 226a at a speed less than the synchronous speed. A small angular speed difference between rotating angular speed of the damping rotor core segment 226a and the angular speed of the stator magnetic field is referred as a 'slip speed'. The angular speed of the stator magnetic field is dependent on a power supply frequency and the number of stator magnetic poles of the stator. In one embodiment, if the power supply frequency is fifty hertz and the number of stator stator magnetic poles is two, the synchrounous speed is three thousand revolutions per minute(rpm). If the slip speed expressed as a fraction of synchronous is aproximately 5%, the angular speed of the rotor is two thousand nine hundred and sixty rpm.

During a steady state operation, when there are load changes, the damping rotor core segment 226a provides a damping torque that reduces speed oscillations of the hybrid motor 126 in shorter time duration. The damping rotor core segment 226a adapts to the changed speed rapidly, enabling the hybrid motor 126 to operate at a new speed in a shorter span of time.

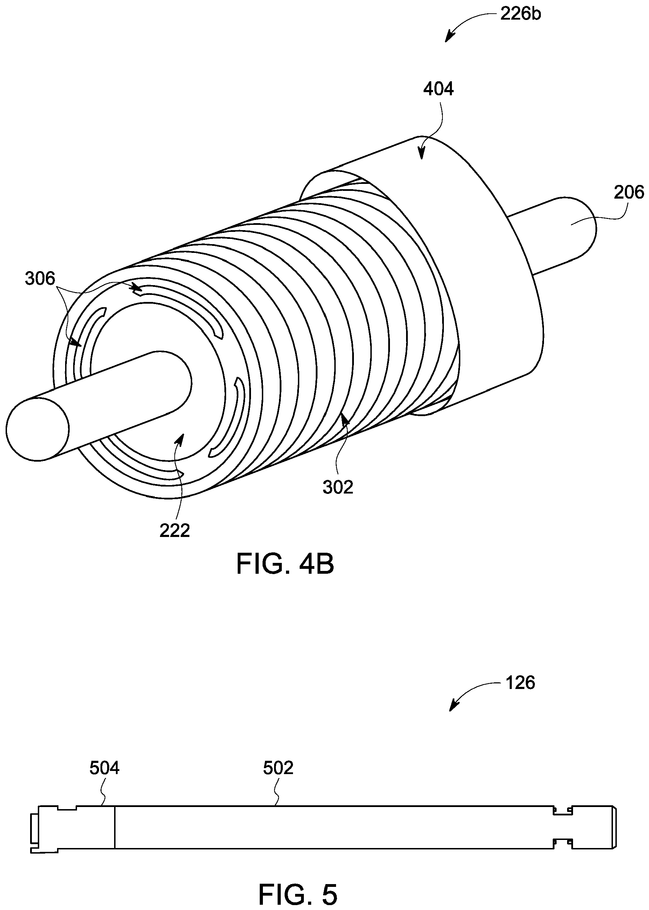

FIG. 4B is a perspective view of one synchronous rotor core segment 226b among the plurality of rotor core segments 226 in accordance with an exemplary embodiment. The synchronous rotor core segment 226b includes the rotor core 222 formed by the plurality of rotor laminations 302 disposed on the motor shaft 206. In one embodiment, the synchronous rotor core segment 226b includes a plurality of permanent magnets 306. In another embodiment, a magnetic field may be generated using a plurality of rotor magnetic poles formed by a plurality of electric conductors. If the permanent magnets 306 are used, only small quantity of stator current is required for rotor magnetisation and thereby ohmic loss in the stator windings is reduced. If electric conductors are used instead of the plurality of permanent magnets 306, larger quantity of stator current is required for rotor magnetization. The synchronous rotor core segment 226b further includes a retention sleeve 404 fitted to the plurality of rotor laminations 302.

In one embodiment of the synchronous rotor core segment 226b, the generated rotating magetic field of the stator interacts with rotor magnetic flux generated by the plurality of permanent magnets embedded in the rotor core 222. The interaction of the rotating stator magnetic field with the rotor magnetic flux generates a rotor torque applied to the synchronous rotor core segment 226b. When the rotor torque is more than an inertia of the synchronous rotor core segment 226b, an angular motion is imparted on the synchronous rotor core segment 226 and the synchronous rotor core segment 226b starts driving a load. During a steady state operation condition, the synchronous rotor core segment 226b drives the load at synchronous speed.

Further, during the synchronous operation of the synchronous rotor core segment 226b, a change in the load results in an instantaneous misalignment between the permanent magnets of the synchronous rotor core segment 226b and the stator magnetic poles of the stator. Such a misalignment alters the speed of the synchronous rotor core segment 226b which in turn results in change of a load angle and load current. The term "load angle" refers to an angular difference between a rotor magnetic field and a stator magnetic field. A change in torque corresponding to a change in the load current is experienced by the rotor. Such a change in torque drives the rotor to operate at the synchronous speed. At the synchrounous speed, however, a mismatch between the required torque and the actual torque increases the rotor speed beyond the synchrounous speed. Rotor speeds beyond the synchronous speeds results in change in sign of a load angle and consequently a change in sign of the load current. As a result, a reverse torque is generated to reduce the rotor speed towards the synchronous speed. Such a fluctuation in rotor speed is termed as "hunting". Such speed oscillations are countered using the induction rotor core segment 226b as explained in subsequent paragraphs.

FIG. 5 is an illustration of the hybrid motor 126 in accordance with an exemplary embodiment. The hybrid motor 126 includes a permanent-magnet synchronous motor 502 and a squirrel cage induction motor 504. The hybrid motor 500 includes a single stator and a single motor shaft (not shown in FIG. 5). The permanent-magnet synchronous motor 502 includes a plurality of synchronous rotor core segments and the squirrel cage induction motor 504 includes one or more induction rotor core segments, mounted on the single motor shaft. The hybrid motor 126 is configured to generate enhanced damping toque using the induction rotor core segments.

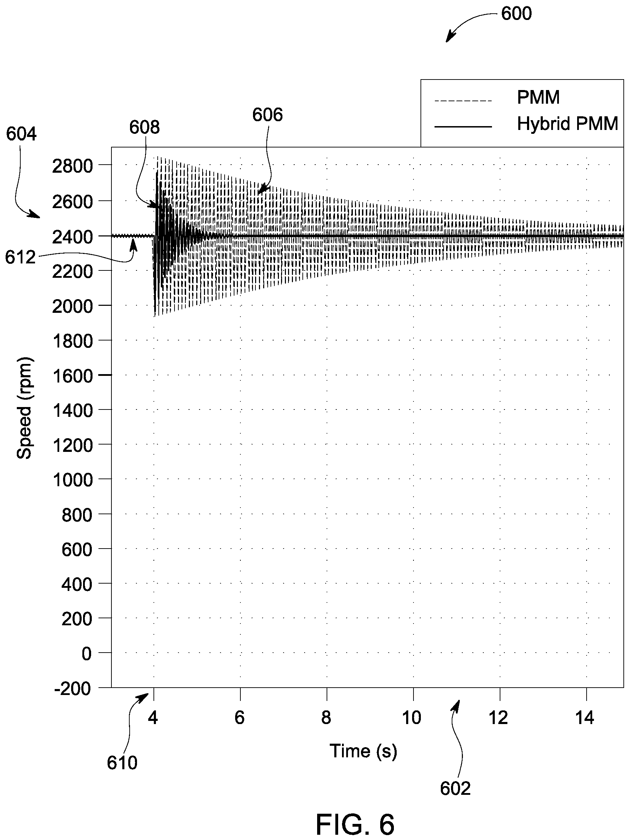

FIG. 6 is a graph 600 illustrating damping characteristics of a hybrid motor in accordance with an exemplary embodiment. The graph includes an x-axis 602 representative of time in seconds and a y-axis 604 representative of rotational speed of a motor shaft in rotations per minute (rpm). The graph 600 includes a first curve 606 representative of a damping response of a conventional permanent magnet motor. The graph further includes a second curve 608 representative of a damping response of the hybrid motor in accordance with an exemplary embodiment. Initially, the curves 606, 608 include a steady state condition 612 for both the conventional permanent magnet motor and the exemplary hybrid motor rotating at an angular velocity of 2400 rpm. At time instant 610 of four seconds, load variation is introduced to both the motors. The curve 606 is indicative of speed variations for more than ten seconds. The second curve 608 is indicative of speed variations controlled within two seconds. Hence, it can be noted herein that the damping response of the exemplary hybrid motor is enhanced compared to the damping response of the conventional permanent magnet motor.

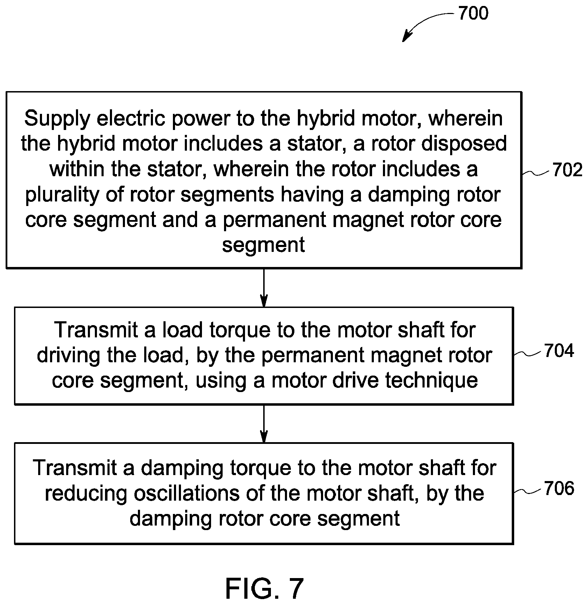

FIG. 7 is a flow chart 700 of a method for operating a hybrid motor in accordance with an exemplary embodiment. The method includes supplying electric power to the hybrid motor at step 702. The hybrid motor includes a stator having a stator core, a plurality of stator windings wound round the stator cored. The hybrid motor futher includes a plurality of stator bearings for supporting a motor shaft against the stator core. The hybrid motor includes a rotor disposed within the stator. Further, the rotor includes a plurality of rotor core segments coupled to the motor shaft and disposd along an axial direction. The plurality of rotor core segments includes a damping rotor core segment and a synchronous rotor core segment. The rotor further includes a plurality of rotor bearings for supporting the motor shaft against plurality of rotor core segments. In one embodment, a three phase power source us used for supplying electric power to the hybrid motor..

In one embodiment, the hybrid motor further includes a plurality of support elements disposed between the rotor core segments, along an axial direction of the motor shaft. In one embodiment, the plurality of rotor core segments comprise a plurality of synchronous rotor core segments. In one embodiment, the plurality of rotor core segments comprises a plurality of damping rotor core segments. The damping rotor core segments may include a squirrel cage induction rotor core segment.

At step 704, the method further includes transmitting a load torque to the motor shaft for driving the load, by the synchronous rotor core segment, using a motor drive technique. In one embodiment, transmitting the load torque comprises operating the hybrid motor using a variable speed driving technique. In another embodiment, transmitting the load torque includes operating the hybrid motor using a direct on-line drive technique. In one embodiment, the plurality of rotor core segments is controlled by a variable speed drive unit. In another embodiment, the plurality of rotor core segments is controlled by a direct on-line drive unit.

At step 706, the method further includes transmitting a damping torque to the motor shaft for reducing oscillations of the motor shaft, by the damping rotor core segment. In one embodiment, transmitting the damping torque includes operating a squirrel cage induction motor of the damping rotor core segments. In some embodiments, a fraction of rated power of the hybrid motor, for example, 5% of rated power, is required by the damping rotor torque to generate required damping torque.

In accordance with the embodiments, discussed herein, the hybrid motor generates enhanced damping torque at synchronous speeds. The exemplary hybrid motor may also be used for applications where damping windings cannot be used.

It is to be understood that not necessarily all such objects or advantages described above may be achieved in accordance with any particular embodiment. Thus, for example, those skilled in the art will recognize that the systems and techniques described herein may be embodied or carried out in a manner that achieves or improves one advantage or group of advantages as taught herein without necessarily achieving other objects or advantages as may be taught or suggested herein.

While the technology has been described in detail in connection with only a limited number of embodiments, it should be readily understood that the specification is not limited to such disclosed embodiments. Rather, the technology can be modified to incorporate any number of variations, alterations, substitutions or equivalent arrangements not heretofore described, but which are commensurate with the spirit and scope of the claims. Additionally, while various embodiments of the technology have been described, it is to be understood that aspects of the specification may include only some of the described embodiments. Accordingly, the specification is not to be seen as limited by the foregoing description, but is only limited by the scope of the appended claims.

Various aspects and embodiments of the present invention are defined by the following numbered clauses:
1. A hybrid motor comprising:
   a motor shaft;
   a stator comprising a stator core, a plurality of stator windings wound around the stator core, and a plurality of stator bearings for supporting the motor shaft against the stator core; and
   a rotor disposed within the stator; wherein the rotor comprises:
      a plurality of rotor core segments disposed along an axial direction and coupled to the motor shaft, wherein the plurality of rotor core segments comprises a damping rotor core segment and a synchronous rotor core segment; and
      a plurality of rotor bearings for supporting the motor shaft against plurality of rotor core segments.
2. The hybrid motor of clause 1, wherein the damping rotor core segment comprises a squirrel cage induction rotor core segment.
3. The hybrid motor of clause 1 or clause 2, wherein the synchronous rotor core segment comprises a plurality of permanents.
4. The hybrid motor of any preceding clause, further comprising a variable speed drive unit coupled to the plurality of rotor core segments and configured to drive the plurality of rotor core segments.
5. The hybrid motor of any preceding clause, further comprising a direct on-line drive unit coupled to the plurality of rotor core segments and configured to drive the plurality of rotor core segments.
6. The hybrid motor of any preceding clause, wherein the damping rotor core segment is configured to operate using a fraction of rated power of the hybrid motor.
7. The hybrid motor of any preceding clause, wherein the damping rotor core segment comprises a plurality of damping rotor core segments.
8. The hybrid motor of any preceding clause, wherein the stator core comprises a plurality of laminations and the plurality of stator windings wound around the plurality of laminations.
9. The hybrid motor of any preceding clause, wherein the synchronous rotor core segment comprises a plurality of permanent magnets disposed along a circumferential direction.
10. The hybrid motor of any preceding clause, wherein the damping rotor core segment comprises a retention sleeve fitted over the plurality of rotor slots.
11. A method for operating a hybrid motor, the method comprising:
   supplying electric power to the hybrid motor;
   wherein the hybrid motor comprises:
      a stator comprising a stator core, a plurality of stator windings wound around the stator core, and a plurality of stator bearings for supporting a motor shaft against the stator core; and
      a rotor disposed within the stator; wherein the rotor comprises:
         a plurality of rotor core segments disposed along an axial direction and coupled to the motor shaft; wherein the plurality of rotor core segments comprises a damping rotor core segment and a synchronous rotor core segment; and
         a plurality of rotor bearings for supporting the motor shaft against plurality of rotor core segments;
      transmitting a load torque to the motor shaft, by the synchronous rotor core segment, using a motor drive technique; and
      transmitting a damping torque to the motor shaft for reducing oscillations of the motor shaft, by the damping rotor core segment.
12. The method of any preceding clause, wherein the hybrid motor driving technique comprises a variable speed driving technique.
13. The method of any preceding clause, wherein the hybrid motor driving technique comprises a direct on-line drive technique.
14. The method of any preceding clause, wherein transmitting the damping torque comprises operating the damping rotor core segment using a fraction of rated power of the hybrid motor.
15. An electric submersible pump comprising:
   a pump unit;
   a hybrid motor coupled to the pump unit, wherein the hybrid motor comprises:
      a motor shaft;
      a stator comprising a stator core, a plurality of stator windings wound around the stator core, and a plurality of stator bearings for supporting the motor shaft against the stator core; and
      a rotor disposed within the stator; wherein the rotor comprises:
         a plurality of rotor core segments disposed along an axial direction and coupled to the motor shaft; wherein the plurality of rotor core segments comprises a damping rotor core segment and a synchronous rotor core segment; and
         a plurality of rotor bearings for supporting the motor shaft against plurality of rotor core segments.
16. The electric submersible pump of any preceding clause, wherein the damping rotor core segment comprises a squirrel cage induction rotor core segment.
17. The electric submersible pump of any preceding clause, wherein the synchronous rotor core segment comprises a plurality of permanent magnets.

## Claims

1. A hybrid motor (126) comprising:
a motor shaft (206);
a stator (202) comprising a stator core (220), a plurality of stator windings wound around the stator core, and a plurality of stator bearings (230) for supporting the motor shaft against the stator core; and
a rotor (204) disposed within the stator (202); wherein the rotor comprises:
a plurality of rotor core segments disposed along an axial direction and coupled to the motor shaft, wherein the plurality of rotor core segments comprises a damping rotor core segment (226a) and a synchronous rotor core segment (226b); and
a plurality of rotor bearings (228) for supporting the motor shaft (206) against plurality of rotor core segments (226a).

2. The hybrid motor of claim 1, wherein the damping rotor core segment (226a) comprises a squirrel cage induction rotor core segment.

3. The hybrid motor of claim 1 or claim 2, wherein the synchronous rotor core segment (226b) comprises a plurality of permanents.

4. The hybrid motor of any preceding claim, further comprising a variable speed drive unit coupled to the plurality of rotor core segments and configured to drive the plurality of rotor core segments.

5. The hybrid motor of any preceding claim, further comprising a direct on-line drive unit coupled to the plurality of rotor core segments and configured to drive the plurality of rotor core segments.

6. The hybrid motor of any preceding claim, wherein the damping rotor core segment is configured to operate using a fraction of rated power of the hybrid motor.

7. The hybrid motor of any preceding claim, wherein the damping rotor core segment (226a) comprises a plurality of damping rotor core segments.

8. The hybrid motor of any preceding claim, wherein the stator core (220) comprises a plurality of laminations and the plurality of stator windings wound around the plurality of laminations.

9. The hybrid motor of any preceding claim, wherein the synchronous rotor core segment (226b) comprises a plurality of permanent magnets disposed along a circumferential direction.

10. The hybrid motor of any preceding claim, wherein the damping rotor core segment (226a) comprises a retention sleeve fitted over the plurality of rotor slots.

11. An electric submersible pump (132) comprising:
a pump unit (124); and
a hybrid motor (126) of any preceding claim coupled to the pump unit (124).

12. A method for operating a hybrid motor, the method comprising:
supplying electric power to the hybrid motor;
wherein the hybrid motor comprises:
a stator comprising a stator core, a plurality of stator windings wound around the stator core, and a plurality of stator bearings for supporting a motor shaft against the stator core; and
a rotor disposed within the stator; wherein the rotor comprises:
a plurality of rotor core segments disposed along an axial direction and coupled to the motor shaft; wherein the plurality of rotor core segments comprises a damping rotor core segment and a synchronous rotor core segment; and
a plurality of rotor bearings for supporting the motor shaft against plurality of rotor core segments;
transmitting a load torque to the motor shaft, by the synchronous rotor core segment, using a motor drive technique; and
transmitting a damping torque to the motor shaft for reducing oscillations of the motor shaft, by the damping rotor core segment.

13. The method of claim 12, wherein the hybrid motor driving technique comprises a variable speed driving technique.

14. The method of claim 12 or claim 13, wherein the hybrid motor driving technique comprises a direct on-line drive technique.

15. The method of any of claims 12 to 14, wherein transmitting the damping torque comprises operating the damping rotor core segment using a fraction of rated power of the hybrid motor.
